# FASCICULE DE BREVET EUROPEEN

(11) **EP 1 900 960 B1**
(45) Date de publication et mention de la délivrance du brevet: **24.06.2009**
(21) Numéro de dépôt: 07114672.4
(22) Date de dépôt: 21.08.2007
(51) Int. Cl.: F16D 65/092

(54) **Patin de frein comportant un réservoir de graisse**
Bremsbelag
Brake pad

(30) Priorité: 13.09.2006 FR 0608067
(43) Date de publication de la demande: 19.03.2008
(73) Titulaire: ROBERT BOSCH GMBH, 70442 Stuttgart (DE)
(72) Inventeur: Gouzy, Xavier, 92400 Courbevoie (FR); Beylerian, Bruno, 95380 Louvres (FR)
(74) Mandataire: Hurwic, Aleksander Wiktor

(56) Documents cités:
- EP-A1- 0 851 139
- US-A- 3 684 061
- US-A- 4 154 322
- US-A- 5 320 200
- US-A- 5 975 252

## Description

L'invention concerne un patin de frein pour un frein à disque de véhicule automobile, comme par example connu du US-A-3 684 061.

L'invention concerne plus particulièrement un patin de frein pour un frein à disque de véhicule automobile, du type qui est destiné à être reçu dans un étrier hydraulique de freinage et qui est susceptible d'être sollicité par ledit étrier contre un disque de frein rotatif, du type qui comporte au moins un support en forme de plaque dont une face active est porteuse d'une garniture réalisée en un matériau de friction qui est destinée à être sollicitée contre le disque, et dont une face opposée de sollicitation est destinée à être sollicitée par au moins une face d'appui d'extrémité de l'étrier.

On connaît de nombreux exemples de patins de frein de ce type.

De tels patins sont généralement reçus par paires dans des étriers de frein flottant en forme de cavalier. Chaque étrier comporte une première branche qui reçoit un piston hydraulique destiné à solliciter un des deux patins associés.

Le patin opposé au patin qui est sollicité par le piston est reçu contre une deuxième branche de l'étrier, aussi appelée "nez d'étrier", qui comporte deux doigts parallèles contre des faces d'appui desquels est reçu le patin.

Lors de l'assemblage d'un tel étrier, il est nécessaire de graisser les surfaces de contact mutuelles du patin et des doigts du nez d'étrier, pour permettre des légères rotations du patin lors des freinages dans un plan parallèle à la surface du disque de frein.

Ce graissage est généralement réalisé au pinceau par un opérateur qui enduit de graisse les faces d'appui des doigts du nez d'étrier et la face de sollicitation du support du patin.

Cette opération est relativement délicate car elle doit être effectuée sans déposer de graisse sur la garniture du patin.

De plus, la durée d'une telle opération la rend inadaptée à un processus d'assemblage en grande série.

Pour remédier à cet inconvénient, l'invention propose un patin de frein comportant des moyens de graissage intégrés.

Dans ce but, l'invention propose un patin de frein du type décrit précédemment, caractérisé en ce que la face de sollicitation du patin comporte au moins un réservoir de graisse dont au moins une paroi destructible, qui est destinée à être tournée vers la face d'appui de l'étrier de frein associée, est destinée à être montée avec jeu par rapport à ladite face d'appui de l'étrier lors du montage du patin dans l'étrier, puis à être détruite par ladite face d'appui lors de la première sollicitation du patin, pour permettre la diffusion de la graisse entre la face de sollicitation du patin et la face d'appui de l'étrier associé.

Selon d'autres caractéristiques de l'invention :
- la paroi du réservoir de graisse est constituée d'un film destructible qui emprisonne la graisse entre ledit film et la face de sollicitation, et dont les bords adhèrent à la face de sollicitation,
- le réservoir comporte au moins une paroi fixe qui est délimitée par une cavité qui est formée dans l'épaisseur du support en forme de plaque et qui débouche dans la face de sollicitation,
- le patin est destiné à être reçu dans un étrier présentant sensiblement la forme d'un cavalier dont une branche reçoit un piston hydraulique et dont l'autre branche comporte deux doigts d'appui sensiblement parallèles comportant chacun une face d'appui destinée à solliciter une extrémité du patin, et il comporte un réservoir de graisse associé à chacun des doigts d'appui.

D'autres caractéristiques et avantages de l'invention apparaîtront à la lecture de la description détaillée qui suit pour la compréhension de laquelle on se reportera aux dessins annexés dans lesquels :
- la figure 1 est une vue en coupe représentant une partie d'un étrier comportant un patin de frein selon l'invention lors de son montage,
- la figure 2 est une vue en coupe représentant une partie d'un étrier comportant un patin de frein selon l'invention lors de sa première sollicitation.

Dans la description qui va suivre, des chiffres de référence identiques désignent des pièces identiques ou ayant des fonctions similaires.

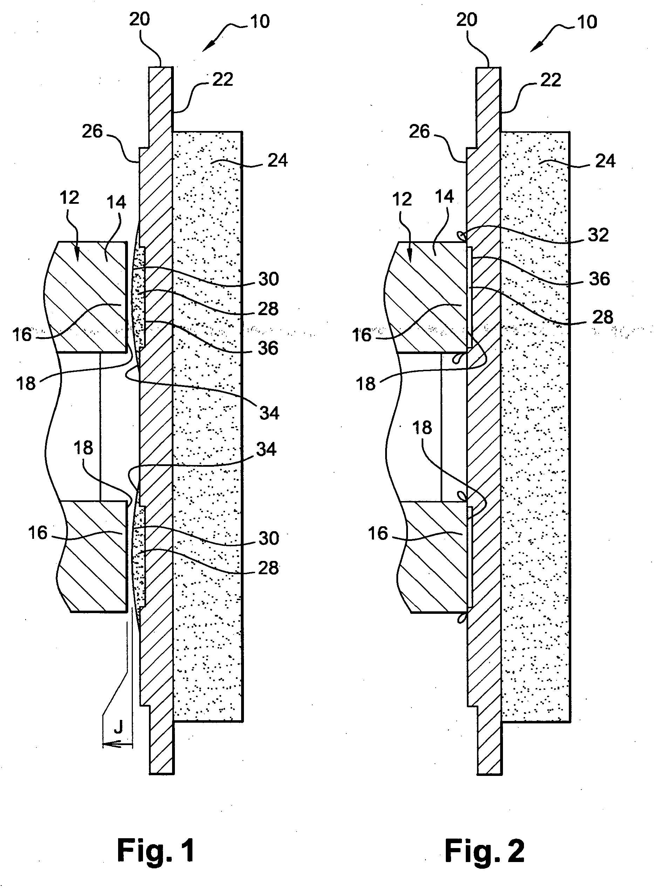

On a représenté sur les figures 1 et 2 un patin 10 de frein pour un frein (non représenté) à disque de véhicule automobile.

De manière connue, le patin 10 est destiné à être reçu dans un étrier 12 hydraulique de freinage dont une partie a été représentée sur les figures 1 et 2.

En particulier, le patin 10 fait partie de manière connue d'un jeu de deux patins qui sont reçus dans un étrier de frein flottant en forme de cavalier dont une première branche (non représentée) reçoit un piston hydraulique qui est destiné à solliciter un des deux patins contre un disque de frein rotatif (non représenté), et dont une deuxième branche 14, aussi appelée "nez d'étrier", comporte deux doigts parallèles 16 contre des faces d'appui 18 desquels sont reçues des extrémités du patin 10.

Cette configuration n'est pas limitative de l'invention et la deuxième branche de l'étrier 12 pourrait ne comporter qu'une seule face d'appui 18.

Tel qu'il a été représenté sur les figures 1 et 2, le patin 10 est donc sollicité contre le disque de frein rotatif par les deux faces d'appui 18 des doigts 16 formant le "nez d'étrier" lorsque l'étrier flottant sollicite le patin opposé par l'intermédiaire de son piston hydraulique.

De manière connue, le patin 10 comporte au moins un support 20 en forme de plaque dont une face active 22 est porteuse d'une garniture 24, réalisée en un matériau de friction, qui est destinée à être sollicitée contre le disque (non représenté).

Une face opposée 26 de sollicitation du support 20 est destinée à être sollicitée par au moins deux faces d'appui 18 de l'étrier 12.

Lors de l'assemblage d'un tel étrier, il est nécessaire de graisser les surfaces de contact mutuelles du patin 10 et des doigts 16 du nez d'étrier, pour permettre des légères rotations du patin 10 lors des freinage parallèlement à la surface du disque de frein.

Ce graissage est généralement réalisé au pinceau par un opérateur qui enduit de graisse les faces d'appui 18 des doigts 16 du nez d'étrier et la face 26 de sollicitation du support 20 du patin 10.

Cette opération est délicate car elle doit être effectuée sans déposer de graisse sur la garniture 24 du patin 10. De ce fait, elle est inappropriée à un processus d'assemblage en grande série.

Pour remédier à cet inconvénient, comme l'illustre la figure 1, la face 26 de sollicitation du patin 10 comporte au moins un réservoir 28 de graisse dont au moins une paroi 30 destructible, qui est destinée à être tournée vers la face d'appui 18 de l'étrier de frein associée, est destinée à être montée avec un jeu "J" par rapport à la face d'appui 18 de l'étrier 12 lors du montage du patin 10 dans l'étrier 12.

Dans le mode de réalisation préféré de l'invention qui concerne un patin associé à un étrier comportant deux doigts 16 formant un nez d'étrier, il sera compris que la face 26 de sollicitation du patin 10 comporte deux réservoirs 28 de graisse et deux parois 30 destructibles associés aux deux doigts 16 de l'étrier 12.

Les parois 30 destructibles sont destinées, comme l'illustre la figure 2, à être détruites chacune par la face d'appui 18 correspondante de l'étrier 12 lors de la première sollicitation du patin 10, pour permettre la diffusion de la graisse 30 entre la face de sollicitation 26 du patin et la face d'appui 18 de l'étrier 12 associé.

De préférence, la paroi 30 du réservoir 28 de graisse est constituée d'un film destructible qui emprisonne la graisse 32 entre ledit film 30 et la face 26 de sollicitation. Comme représenté à la figure 1, pour fixer le film 30 sur la face 26 de sollicitation, les bords 34 du film 30 adhèrent à la face 26 de sollicitation du patin.

Avantageusement, la capacité du réservoir 28 de graisse peut être prévue pour être supérieure au volume délimité entre la face d'appui 26 de sollicitation du patin 10 et le film 30. A cet effet, le réservoir 28 comporte au moins une paroi fixe qui est délimitée par une cavité 36 qui est formée dans l'épaisseur du support 20 en forme de plaque et qui débouche dans la face 26 de sollicitation.

Lorsque la face d'appui 18 de l'étrier 12 détruit le film 30 formant la paroi destructible, elle repousse les résidus de film 30 à l'intérieur de la cavité 36, ce qui a pour effet d'expulser la totalité de la graisse contenue dans la cavité 36.

La cavité 36 permet donc de bénéficier d'un volume supplémentaire de graisse qui peut être entièrement utilisé.

L'invention permet donc de graisser automatiquement es surfaces de contact mutuelles du patin 10 et des doigts 16 du nez d'étrier, sans intervention d'un quelconque opérateur.

## Revendications

1. Patin (10) de frein pour un frein à disque de véhicule automobile, du type qui est destiné à être reçu dans un étrier (12) hydraulique de freinage et qui est susceptible d'être sollicité par ledit étrier (12) contre un disque de frein rotatif, du type qui comporte au moins un support (20) en forme de plaque dont une face active (22) est porteuse d'une garniture (24) réalisée en un matériau de friction qui est destinée à être sollicitée contre le disque, et dont une face (26) opposée de sollicitation est destinée à être sollicitée par au moins une face d'appui (18) d'extrémité de l'étrier (12),
**caractérisé en ce que** la face (26) de sollicitation du patin comporte au moins un réservoir (28) de graisse (32) dont au moins une paroi (30) destructible, qui est destinée à être tournée vers la face d'appui (18) de l'étrier (12) de frein associée, est destinée à être montée avec jeu (J) par rapport à ladite face d'appui (18) de l'étrier (12) lors du montage du patin (10) dans l'étrier (12), puis à être détruite par ladite face d'appui (18) lors de la première sollicitation du patin (10), pour permettre la diffusion de la graisse (32) entre la face (26) de sollicitation du patin et la face d'appui (18) de l'étrier (12) associé.

2. Patin (10) de frein selon la revendication précédente, **caractérisé en ce que** la paroi (30) du réservoir (28) de graisse (32) est constituée d'un film destructible qui emprisonne la graisse (32) entre ledit film (30) et la face (26) de sollicitation, et dont les bords (34) adhèrent à la face (26) de sollicitation.

3. Patin (10) de frein selon la revendication précédente, **caractérisé en ce que** le réservoir (28) comporte au moins une paroi fixe qui est délimitée par une cavité (36) qui est formée dans l'épaisseur du support (20) en forme de plaque et qui débouche dans la face (26) de sollicitation.

4. Patin (10) de frein selon l'une quelconque des revendications précédentes, **caractérisé en ce qu'**il est destiné à être reçu dans un étrier (12) présentant sensiblement la forme d'un cavalier dont une branche reçoit un piston hydraulique et dont l'autre branche (14) comporte deux doigts (16) d'appui sensiblement parallèles comportant chacun une face (18) d'appui destinée à solliciter une extrémité du patin (10), et **en ce qu'**il comporte un réservoir (28) de graisse associé à chacun des doigts (16) d'appui.

## Claims

1. Brake pad (10) for a motor vehicle disk brake, of the type which is intended to be received in a hydraulic braking caliper (12) and which is able to be applied by said caliper (12) against a rotating brake disk, and of the type which comprises at least one plate-shaped support (20) of which an active face (22) carries a lining (24) made of a friction material and intended to be applied against the disk, and of which an opposed application face (26) is intended to be acted on by at least one end bearing face (18) of the caliper (12), **characterized in that** the application face (26) of the pad comprises at least one reservoir (28) of grease (32), of which at least one destructible wall (30), which is intended to be directed toward the bearing face (18) of the associated brake caliper (12), is intended to be mounted with a clearance (J) with respect to said bearing face (18) of the caliper (12) during the operation of mounting the pad (10) in the caliper (12), and then to be destroyed by said bearing face (18) during the first application of the pad (10) so as to allow diffusion of the grease (32) between the application face (26) of the pad and the bearing face (18) of the associated caliper (12).

2. Brake pad (10) according to the preceding claim, **characterized in that** the wall (30) of the reservoir (28) of grease (32) consists of a destructible film which entraps the grease (32) between said film (30) and the application face (26), and the edges (34) of which film adhere to the application face (26).

3. Brake pad (10) according to the preceding claim, **characterized in that** the reservoir (28) comprises at least one fixed wall which is delimited by a cavity (36) which is formed within the thickness of the plate-shaped support (20) and which opens out into the application face (26).

4. Brake pad (10) according to any one of the preceding claims, **characterized in that** it is intended to be received in a caliper (12) substantially taking the form of a U-shaped saddle of which one branch receives a hydraulic piston and of which the other branch (14) comprises two substantially parallel bearing fingers (16) each having a bearing face (18) intended to act on one end of the pad (10), and **in that** it comprises a grease reservoir (28) associated with each of the bearing fingers (16).

## Patentansprüche

1. Bremsklotz (10) für eine Scheibenbremse eines Kraftfahrzeugs, vom Typ, der dazu bestimmt ist, in einem hydraulischen Bremssattel (12) aufgenommen zu werden und der vom Bremssattel (12) gegen eine drehende Bremsscheibe beaufschlagt werden kann, vom Typ, der mindestens einen plattenförmigen Träger (20) aufweist, von welchem eine aktive Fläche (22) einen Bremsbelag (24) trägt, der aus einem Reibmaterial besteht und dazu bestimmt ist, gegen die Scheibe beaufschlagt zu werden, und von welchem eine entgegengesetzte Beaufschlagungsfläche (26) dazu bestimmt ist, von mindestens eine Endanlagefläche (18) des Bremssattels (12) beaufschlagt zu werden,
**dadurch gekennzeichnet, dass** die Beaufschlagungsfläche (26) des Bremsklotzes mindestens einen Behälter (28) für Schmiermittel (32) aufweist, von welchem mindestens eine zerstörbare Wand (30), die dazu bestimmt ist, gegen die zugeordnete Anlagefläche (18) des Bremssattels (12) gerichtet zu werden, dazu bestimmt ist, beim Montieren des Bremsklotzes (10) in dem Sattel (12) gegenüber der Anlagefläche (18) des Sattels (12) mit Spiel (J) angebracht und dann bei der ersten Beaufschlagung des Bremsklotzes (10) durch die Anlagefläche (18) zerstört zu werden, um das Verteilen des Schmiermittels (32) zwischen der Beaufschlagungsfläche (26) des Bremsklotzes (10) und der zugeordneten Anlagefläche (18) des Sattels (12) zu ermöglichen.

2. Bremsklotz (10) nach dem vorhergehenden Anspruch, **dadurch gekennzeichnet, dass** die Wand (30) des Behälters (28) für Schmiermittel (32) aus einer zerstörbaren Folie besteht, die das Schmiermittel (32) zwischen der Folie (30) und der Beaufschlagungsfläche (26) eingefangen hält, und deren Ränder (34) an der Beaufschlagungsfläche (26) haften.

3. Bremsklotz (10) nach dem vorhergehenden Anspruch, **dadurch gekennzeichnet, dass** der Behälter (28) mindestens eine feste Wand aufweist, die durch einen Hohlraum (36) begrenzt ist, der in der Dicke des plattenförmigen Trägers (20) ausgebildet ist und in die Beaufschlagungsfläche (26) mündet.

4. Bremsklotz (10) nach einem der vorhergehenden Ansprüche, **dadurch gekennzeichnet, dass** er dazu bestimmt ist, in einem Bremssattel (12) aufgenommen zu werden, der im Wesentlichen die Form eines Reiters aufweist, von welchem ein Schenkel den hydraulischen Kolben aufnimmt und der andere Schenkel (14) zwei im Wesentlichen parallele Anlagefinger (16) aufweist, die jeweils eine Anlagefläche (18) aufweisen, die dazu bestimmt ist, ein Ende des Bremsklotzes (10) zu beaufschlagen, und dass er einen Schmiermittelbehälter (28) aufweist, der jedem der Anlagefinger (16) zugeordnet ist.
